# EUROPÄISCHE PATENTANMELDUNG

(11) **EP 2 011 650 A2**
(43) Veröffentlichungstag der Anmeldung: **07.01.2009**
(21) Anmeldenummer: 08158452.6
(22) Anmeldetag: 18.06.2008
(51) Int. Cl.: B41F 21/00, B41F 33/00

(54) **Bogenführung für Bogeninspektionssystem**

(30) Priorität: 04.07.2007 DE 102007009389
(71) Anmelder: manroland AG, 63075 Offenbach/Main (DE)
(72) Erfinder: Peter, Thomas, 64832, Babenhausen (DE)

(57) **Zusammenfassung**

In Bogendruckmaschinen sind Inspektionssysteme zur Erfassung von Qualitätsmerkmalen von fertig bedruckten Druckbogen bekannt. Die Bogenführung soll zur Ermöglichung einer exakten Messung am Druckbogen mit einfachsten Mitteln verbessert werden. Dazu wird an dem für die Abtastung eines Druckbogens B verwendeten Gegendruckzylinder 2 eine Leiteinrichtung 14 wenigstens im Bereich vor dem Abtastbereich einer Bogenabtasteinrichtung 7 angeordnet. Die Leiteinrichtung 14 ist mit einstellbaren und/oder austauschbaren Leitelementen versehen und aus dem Druckwerk 1 entnehmbar.

## Beschreibung

Die Erfindung betrifft eine Vorrichtung nach dem Oberbegriff des Anspruches 1.

Es ist bekannt im Bereich des Bogentransports zwischen Druckwerken einer Druckmaschine und einer Auslegeeinrichtung Inspektionssysteme anzuordnen. Hierbei werden im Allgemeinen Kameras den Bogen führenden Elementen wie endlosen Kettenfördersystemen oder Bogentransporttrommeln zugeordnet. Entsprechend der Produktionsweise von Druckbogen werden Inspektionssysteme sowohl der Bogenvorder- als auch der -rückseite zugeordnet, wobei es notwendig ist, die Druckbogen für die Abtastung in definierter Lage bereitzustellen. Hierzu sind verschiedene Möglichkeiten bekannt.
Einerseits kann ein Druckbogen an einem Kettenfördersystem geführt und in diesem Fall eben ausgespannt werden. Eine derartige Vorrichtung mit einem Inspektionssystem an Druckmaschinen ist in der DE 42 17 942 A1 beschrieben. Dort wird in einer Druck-Qualitätskontrolleinrichtung für eine Schön- und Widerdruck-Rotationsdruckmaschine der zu vermessende Druckbogen an Greifersystemen in einem endlosen Kettenfördersystem gehalten. Um den Druckbogen während des Abtastvorganges exakt führen zu können, sind für den Bogentransport zum Bogenausleger in der Bogenbahn mehrere Bogenleitstäbe vorgesehen, auf denen die Druckbögen eben geführt werden, wobei die Bogenleitstäbe den Druckbögen in druckfreien Zonen des Druckbildes zugeordnet sind. Gleichzeitig kann jeder Druckbogen von oben und unten mittels je einer Videokamera abgetastet werden.

Eine andere Möglichkeit besteht darin, Druckbögen in einer Druckmaschine während des Transports auf einer Bogentransporttrommel zu vermessen. Dabei können die Druckbögen mittels pneumatischer Mittel auf der Bogentransporttrommel straff gehalten und mittels einer der Bogentransporttrommel zugeordneten Aufnahmeeinrichtung in definierter Lage vermessen werden.

Schließlich ist aus der DE 10 2005 011 758 A1 eine Bogenführung für ein Bogeninspektionssystem bekannt. In Zuordnung zu dem für die Führung eines Druckbogens verwendeten Gegendruckzylinder ist eine Bogenleiteinrichtung wenigstens im Bereich nach dem Abtastbereich einer Bogenabtasteinrichtung angeordnet. Die Bogenleiteinrichtung ist aus dem Druckwerk entnehmbar. Ein Teil der Bogenleiteinrichtung kann auch nach einem Druckspalt des letzten Druckwerkes und vor dem Abtastbereich der Bogenabtasteinrichtung angeordnet sein.

Die gezeigten starren Bogenleiteinrichtungen neigen dazu, Druckfarbe von dem hochschlagenden Ende des aus dem Druckspalt auslaufenden Druckbogens anzunehmen. Dies erzeugt einerseits Verschmierungen und durch Farbrückspaltung auch generell Störungen im Druckbild.

Die Aufgabe der Erfindung ist daher, in einer gattungsgemäßen Vorrichtung bei exakter Bogenführung zur Abtastung von Druckbögen, Störungen durch Farbverlagerungen während des Bogenlaufes in der Druckmaschine zu vermeiden.

Die gestellte Aufgabe wird mit den Merkmalen des Patentanspruches 1 gelöst.

In vorteilhafter Weise wird durch den Einsatz einer oder mehrerer zonaler Bogenführungseinrichtungen im Bereich nach dem Druckspalt des letzten Druckwerkes an dem entsprechenden letzten Druckzylinder eine Verbesserung der Abtastbarkeit von Bogen erzielt.
In vorteilhafter Weise kann die Bogenführung ergänzt werden durch Stellmittel zur Positionierung der zonalen Bogenführungseinrichtung, sowie durch Blas- oder Ansaugmittel.

Die Erfindung wird im Folgenden anhand eines Ausführungsbeispieles näher dargestellt. Die zugehörigen Zeichnungen zeigen in
- Fig. 1: ein Druckwerk einer Bogenrotationsdruckmaschine mit einer erfindungsgemäßen Vorrichtung und
- Fig. 2: eine Vorrichtung an einem Gegendruckzylinder.

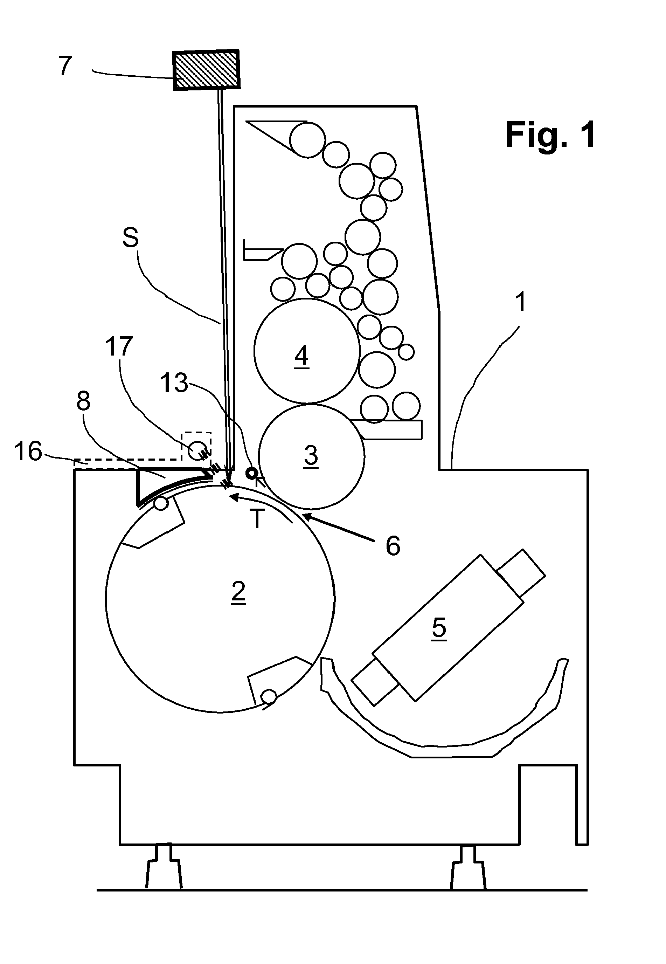

In Figur 1 ist ein Druckwerk 1 einer Bogenoffsetdruckmaschine dargestellt. Das Druckwerk 1 weist einen Gegendruckzylinder 2, einen Gummizylinder 3 und einen Plattenzylinder 4 auf. Der Gegendruckzylinder 2 und der Gummizylinder 3 bilden einen Druckspalt 6. Eine auf dem Plattenzylinder 4 aufgespannte Druckform wird mit Feuchtmittel und Druckfarbe versorgt. Das Druckbild (Teilbild eines mehrfarbigen Druckes) wird vom Gummizylinder 3 auf dem Druckbogen B am Gegendruckzylinder 2 im Druckspalt 6 abgedruckt.

In Druckmaschinen sind meist mehrere Druckwerke 1 zum Drucken verschiedener Druckfarben in den Teilbildern eines Druckbildes vorgesehen. Wenn Druckwerk 1 das letzte Druckwerk der Druckmaschine ist, liegt auf der Oberfläche des Druckbogens B nach dem Durchlaufen des Druckspalts 6 ein vollständiges mehrfarbiges Druckbild vor.
Druckbilder werden nach neuerer Technik durch Inspektion auf Vollständigkeit bzw. Exaktheit bzw. mögliche andere Druckfehler wie Verschmutzungen hin untersucht. Eine entsprechende Einrichtung weist hier oberhalb des Druckwerks 1 eine Bogenabtasteinrichtung 7 auf, die mit einer Kamera versehen und in Abtastrichtung S auf den Druckbogen B im Bereich hinter dem Druckspalt 6 am Gegendruckzylinder 2 gerichtet ist. Dazu ist im Druckwerk 1 an entsprechender Stelle ein Beobachtungsspalt A freigehalten.
Mittels der Kamera nimmt die Bogenabtasteinrichtung 7 das Druckbild beispielsweise zeilenweise in kleinen Bildbereichen mit hoher Geschwindigkeit über die Länge des Druckbogens B auf, wobei zur vollständigen Information über das Druckbild die Daten aus den Zeilen wieder zusammengesetzt werden. Mittels der so vollständig vorliegenden Information des Inhalts des gerade gedruckten Druckbogens B kann eine Auswertung auf Fehler erfolgen. Hierfür verwendet die entsprechende Steuerung zum Vergleich einen Satz paralleler Informationen über einen für gut erachteten Druckbogen B.

Druckbogen werden auf bekannte Weise durch die Druckmaschine transportiert. Ein Druckbogen B wird mittels eines Transferzylinders 5 dem Gegendruckzylinder 2 in Druckwerk 1 zugeführt und dort durch den Druckspalt 6 geführt. Damit die Aufnahme des Druckbogens B mittels der Bogenabtasteinrichtung 7 exakt erfolgt, wird im Bereich des Austritts aus dem Druckspalt 6 der freiliegende Druckbogen B mittels Bogenleiteinrichtungen 8, 14 am Gegendruckzylinder 2 glatt gehalten.

Nahe dem Austritt des Druckbogens B aus dem Druckspalt 6 kann ein Blasrohr 13 oder eine mechanische Leiteinrichtung 14 angeordnet sein. Ein Blasrohr 13 kann mit gesteuerter Blasluft versorgt werden und zum Druckspalt 6 hin ausgerichtet sein, um den Druckbogen B nach Austritt aus dem Druckspalt 6 auf der Oberfläche des Gegendruckzylinders 2 zu führen.
Eine Leiteinrichtung 14 kann vorteilhaft mit einer Schutzeinrichtung gegen den Eingriff in den Druckspalt 6 gekoppelt sein.
Damit wird ein Abheben vor allem des Endes des Druckbogens B vom Gegendruckzylinder 2 nach dem Austritt aus dem Druckspalt 6 vermieden.

Damit die Aufnahme des Druckbogens B exakt erfolgt, wird weiterhin im Bereich des nach dem Austritt aus dem Druckspalt 6 freiliegenden Druckbogens B eine Bogenleiteinrichtung 8 der Oberfläche des Gegendruckzylinders 2 zugeordnet. Die Bogenleiteinrichtung 8 ist möglichst dicht oberhalb der Oberfläche des Gegendruckzylinders 2 angeordnet. Der minimale Abstand ist durch die Höhe von den Druckbogen B auf dem Gegendruckzylinder 2 haltenden Greifern 18 begrenzt. Die Bogenleiteinrichtung 8 ist dem Gegendruckzylinder 2 in Transportrichtung T des Druckbogens B nach einem Beobachtungsspalt A für die Inspektion der Bogenabtasteinrichtung 7 in Abtastrichtung S zugeordnet und kann den Beobachtungsspalt A begrenzen.

Die Bogenleiteinrichtung 8 kann an einer klappbaren Schutzvorrichtung oberhalb des Gegendruckzylinders 2 befestigt sein. Weiterhin kann eine für die Inspektion erforderliche Beleuchtungseinrichtung 17 an der Schutzvorrichtung parallel zum Beobachtungsspalt A angeordnet sein, um diesen vollständig auszuleuchten.

Die Bogenleiteinrichtung 8 ist so ausgeführt, dass sie aus dem Druckwerk 1 entnehmbar ist, um bei Wartungs- oder Überwachungsarbeiten freien Zugang zum Gegendruckzylinder 2 zu gewährleisten.

Die Bogenleiteinrichtung 8 kann als Blaseinrichtung ausgebildet sein, wozu eine Luftkammer 9 vorgesehen ist. In deren dem Gegendruckzylinder 2 zugeordneten Seite sind Luftaustrittsöffnungen 10 vorgesehen, die über die gesamte Bogenleiteinrichtung 8 und/oder auch an den Kanten der Leitfläche der Bogenleiteinrichtung 8 vorgesehen sind. Die Versorgung mit Blasluft kann steuerbar sein.

Die Bogenleiteinrichtung 8 kann mehrteilig ausgeführt sein. Ein einfaches Leitelement mit einer Bogenführungsfläche und einem Trennsteg 11 ist als Grundelement vorgesehen, auf das eine Luftkammer 9 aufsetzbar ist. Eine Verlängerung 15 bis zum Beobachtungsspalt A und ein zusätzliches Leitelement für den Bereich bis zu den Leitelementen am Druckspalt 6 ergänzen die Bogenleiteinrichtung 8.

Die Bogenleiteinrichtung 8 ist vorteilhaft mit einer speziellen Oberfläche gegen das Ansetzen bzw. Abschmieren von Druckfarbe aus dem noch relativ frischen Druckbild ausgerüstet. Hierfür sind spezielle Oberflächenwerkstoffe und/oder eine Profilierung der Oberfläche vorgesehen.

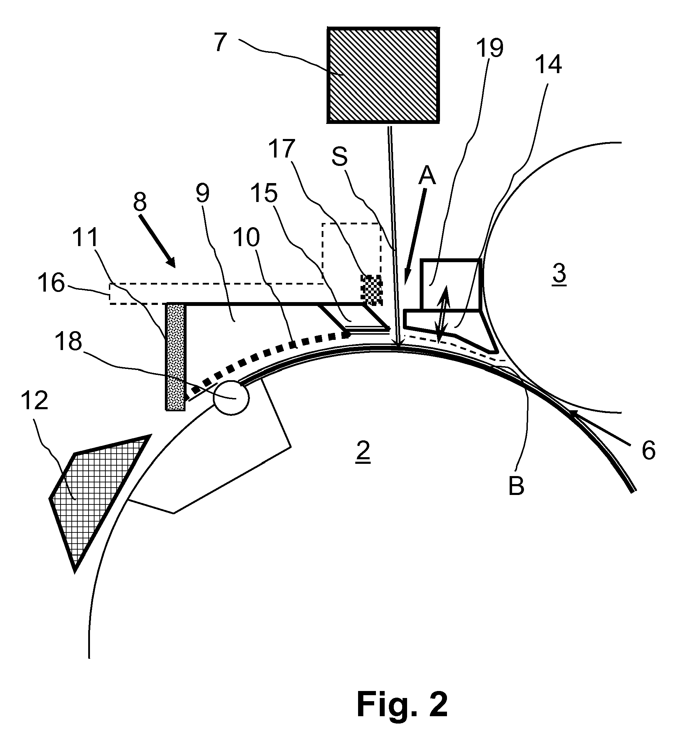

In erfindungsgemäßer Ausführungsform erstreckt sich also eine Leiteinrichtung 14, wie in Figur 2 dargestellt und weiter oben bereits erläutert, entgegen der Transportrichtung T in Richtung auf den Druckspalt 6 hin. Die Leiteinrichtung 14 ist hier nur in Seitenansicht gezeigt, weist aber mehrere Leitelemente der gezeigten Querschnittsform auf. Jedes Leitelement hat eine geringe Breite. Die Leitelemente der Leiteinrichtung 14 sind an einer Halterung 19 befestigt. Sie können dort quer zur Transportrichtung T verschoben werden. Die Einstellung erfolgt vorzugsweise auf so genannte druckfreie Bereiche. Diese ergeben sich bei der Zusammenstellung von mehreren Druckbildern mit Zwischenräumen, die nicht bedruckt werden. Dort ist eine Berührung unschädlich.
In diesem Zusammenhang kann auch auf die Positionen von druckfreien Bereichen, die sich in Bogentransportrichtung T lediglich im Bereich des Bogenendes eines Druckbogens B erstrecken, Bezug genommen werden. Dies ist im Verpackungsdruck ggf. durch eine entsprechende Anordnung von Drucknutzen möglich. Da die Druckbögen B zwischen den Greifern 18 und der Einspannung im Druckspalt 6 bis kurz vor deren Ende sicher gehalten werden, muss eine Hilfsführung mittels der Leitelemente der Leiteinrichtung 14 auch nur in diesem hinteren Bereich vorgesehen werden. Erst dann wird das Bogenende frei, muss geführt werden und kann an die Leiteinrichtungen anschlagen.

Die Einstellung kann mittels einer fernbedienbaren Traversiereinrichtung erfolgen. Hierbei ist eine automatische Vorstellung auf die druckfreien Bereiche ausgehend von Daten der Vorstufe möglich, da dort schon die nicht bedruckten Zonen, die sich in einer oder mehreren Linien parallel zur Transportrichtung T erstrecken, ermittelbar sind. Die Leitelemente der Leiteinrichtung 14 können so auch auf Ränder des Druckbogens B oder bei zu wenigen druckfreien Bereichen auch außerhalb des Formats des Druckbogens eingestellt werden.

Die Leitelemente der Leiteinrichtung 14 können in Form von Stegen oder Bügeln ausgeführt sein. Die Oberfläche der Leitelemente kann farbabweisend behandelt sein. Die Leitelemente können auch Blasdüsen aufweisen oder als Blaseinrichtungen ausgebildet sein, die mit steuerbarer Blasluft beaufschlagt werden können. Die Leitelemente können auch Saugdüsen aufweisen oder als Saugeinrichtungen ausgebildet sein, die mit steuerbarer Saugluft beaufschlagt werden können. Je nach Betriebsart kann auch eine Kombination von Blas- und Saugeinrichtungen vorgesehen sein.

Die Leitelemente sind an der Leiteinrichtung 14 austauschbar angeordnet. Daher können für die Verarbeitung unterschiedlicher Bedruckstoffe Leitelemente mit unterschiedlichen Konturen eingesetzt werden. In diesem Zusammenhang können auch Leitelemente unterschiedlicher Größen vorgesehen sein, damit sich unterschiedliche Abstände von deren Leitfläche zur Oberfläche des Gegendruckzylinders 2 oder unterschiedliche Breiten der Stützfläche für die Druckbögen B ergeben. Diese Funktionalität kann auch durch eine Verstellbarkeit der Halterung 19 relativ zur Oberfläche des Gegendruckzylinders 2 erreicht werden, so dass die Position der Leitelemente relativ zum Gegendruckzylinder 2 für die Leiteinrichtung insgesamt bzw. für alle Leitelemente gemeinsam anpassbar ist.
Bei der engst möglichen Positionierung der Leitelemente der Leiteinrichtung 14 zur Oberfläche des Gegendruckzylinders 2 ist eine Positionierung der Leitelemente in Bereich zwischen den Greifern 18 des Gegendruckzylinders 2 möglich. So kann die Bogenführung der zu inspizierenden Druckbögen B optimiert werden.

### Bezugszeichenliste

- 1: Druckwerk
- 2: Gegendruckzylinder
- 3: Gummizylinder
- 4: Plattenzylinder
- 5: Transferzylinder
- 6: Druckspalt
- 7: Bogenabtasteinrichtung
- 8: Bogenleiteinrichtung
- 9: Luftkammer
- 10: Luftaustrittsöffnung
- 11: Trennsteg
- 12: Trockner
- 13: Blasrohr
- 14: Bogenleiteinrichtung
- 15: Verlängerung
- 16: Schutzvorrichtung
- 17: Beleuchtungseinrichtung
- 18: Greifer
- 19: Halterung

- A: Beobachtungsspalt
- B: Druckbogen
- T: Transportrichtung
- S: Abtastrichtung

## Patentansprüche

1. Vorrichtung zur Bogenführung in einer Bogen verarbeitenden Druckmaschine mit Mitteln zur konturgerechten Führung eines Druckbogens (B) an Bogentransportmitteln wenigstens während der Dauer einer Oberflächenabtastung, wobei eine Bogenabtasteinrichtung (7) auf einen Abtastbereich (A) eines Bogen führenden Zylinders gerichtet ist, der dem Druckspalt (6) des letzten Druckwerkes (1) der Druckmaschine nachgeordnet ist,
**dadurch gekennzeichnet,**
**dass** wenigstens dem Bereich der Abtastung vorgeordnet eine Leiteinrichtung (14) dem Gegendruckzylinder (2) zugeordnet ist und dass die Leiteinrichtung (14) quer zur Bogentransportrichtung (T) verschiebbare Leitelemente aufweist.

2. Vorrichtung nach Anspruch 1,
**dadurch gekennzeichnet,**
**dass** die Leiteinrichtung (14) relativ zur Oberfläche des Gegendruckzylinders (2) im Wesentlichen in dessen Umfangsrichtung linienförmig ausgebildet und der den Druckbogen (B) transportierenden Oberfläche des Gegendruckzylinders (2) wenigstens sich einerseits parallel zur Zylinderachse über die gesamte Zylinderlänge erstreckend stützpunktartig und wenigstens sich über einen Teil des Zylinderumfangs kontinuierlich erstreckend zugeordnet ist.

3. Vorrichtung nach Anspruch 1 oder 2,
**dadurch gekennzeichnet,**
**dass** die Leiteinrichtung (14) der Oberfläche des Gegendruckzylinders (2) einen engen Leitspalt für die Druckbogen (B) bildend und im Wesentlichen dem Abtastbereich (A) benachbart oder diesen begrenzend zugeordnet ist.

4. Vorrichtung nach Anspruch 1 bis 3,
**dadurch gekennzeichnet,**
**dass** die Leiteinrichtung (14) als Blas- und/oder Saugeinrichtung ausgeführt und mit Vorrichtungen zur Zufuhr von Blas- und/oder Saugluft versehen ist.

5. Vorrichtung nach Anspruch 1 bis 4,
**dadurch gekennzeichnet,**
**dass** die dem Gegendruckzylinder (2) zugewandte Seite der Leiteinrichtung (14) mit einer farbabweisenden Oberfläche versehen ist.

6. Vorrichtung nach einem der vorhergehenden Ansprüche,
**dadurch gekennzeichnet,**
**dass** die Leiteinrichtung (14) einzelne Leitelemente aufweist, deren Leitflächen sich im Wesentlichen linear und parallel zur Transportrichtung (T) der Druckbogen (B) erstreckende Leitflächen aufweisen.

7. Vorrichtung nach Anspruch 6,
**dadurch gekennzeichnet,**
**dass** die Leitelemente der Leiteinrichtung (14) an einer Halterung (19) quer zur Transportrichtung (T) der Druckbogen (B) verschiebbar einstellbar angeordnet sind.

8. Vorrichtung nach Anspruch 6,
**dadurch gekennzeichnet,**
**dass** die Leitelemente der Leiteinrichtung (14) an der Halterung (19) austauschbar angeordnet sind.

9. Vorrichtung nach Anspruch 6, 7 oder 8,
**dadurch gekennzeichnet,**
**dass** Leitelemente der Leiteinrichtung (14) mit unterschiedlicher Kontur und/oder unterschiedlicher Größe in das Druckwerk (1) einsetzbar sind.

10. Vorrichtung nach Anspruch 6 bis 8,
**dadurch gekennzeichnet,**
**dass** die Halterung (19) der Leiteinrichtung (14) relativ zur Oberfläche des Gegendruckzylinders (2) verstellbar angeordnet ist.

11. Vorrichtung nach einem der vorhergehenden Ansprüche
**dadurch gekennzeichnet,**
**dass** die Leiteinrichtung (14) an einer den Gegendruckzylinder (2) im Bereich des Beobachtungsspaltes (A) abdeckenden Schutzvorrichtung in dem Druckwerk (1) angeordnet ist.

12. Vorrichtung nach einem der vorhergehenden Ansprüche
**dadurch gekennzeichnet,**
**dass** die Leitelemente der Leiteinrichtung (14) an der Halterung (19) mit Antriebseinrichtungen verschiebbar einstellbar angeordnet sind, dass eine Steuerung zur Positionierung der Leitelemente vorgesehen ist, und dass die Steuerung mit einer Steuereinrichtung der Druckmaschine und/oder einer Steuereinrichtung zur Voreinstellung der Druckmaschine verbunden ist, wobei die Leitelemente auf im wesentlichen streifenförmige Zonen der Druckbögen (B) einstellbar sind, die, sich parallel zur Bogentransportrichtung (T) erstreckend, wenigstens im hinteren Bereich des Druckbogens (B) nicht bedruckt sind.
